# DEMANDE DE BREVET EUROPEEN

(11) **EP 2 251 230 A1**
(43) Date de publication de la demande: **17.11.2010**
(21) Numéro de dépôt: 10161731.4
(22) Date de dépôt: 03.05.2010
(51) Int. Cl.: B60R 11/02, H04B 1/08

(54) **Dispositif de contrôle de sources audio et/ou vidéo interne et externe, pour un volume standardisé d'un système**

(30) Priorité: 11.05.2009 FR 0953088
(71) Demandeur: Peugeot Citroën Automobiles SA, 78140 Vélizy-Villacoublay (FR)
(72) Inventeur: Bertrand Belanger, Pascal, 78280 Guyancourt (FR)
(74) Mandataire: Vigand, Régis Louis Michel

(57) **Abrégé**

Un dispositif (D) est destiné au contrôle de sources audio et/ou vidéo (SI, SE) dans un volume standardisé d'un système équipé d'au moins un haut-parleur. Ce dispositif (D) comprend i) un module (CC) logé dans le volume standardisé, muni de composants électriques définissant un amplificateur audio, connecté au haut-parleur, et une source audio radiophonique (SI), et des organes de commande saillants (OC1-OC6) et des moyens d'affichage (EC) montés sur une face avant et propres respectivement à sélectionner et commander chaque source (SI, SE) et des paramètres de diffusion sonore et à afficher des informations relatives à la source (SI, SE) sélectionnée, ii) au moins un connecteur de liaison (CL1, CL2) connecté au module (CC) et propre à coopérer avec un câble de liaison correspondant d'une source audio et/ou vidéo externe (SE) et logé dans le volume standardisé, et iii) un masque (M) propre à être monté devant la face avant du module (CC) de manière à masquer le volume standardisé, et comprenant des ouvertures destinées à être placées respectivement au niveau des organes de commande saillants (OC1-OC6), des moyens d'affichage (EC) et de chaque connecteur de liaison (CL1, CL2), et un réceptacle ouvert (RO) logé dans le volume standardisé et propre à recevoir la source externe (SE).

## Description

L'invention concerne la diffusion de sons ainsi qu'éventuellement d'images au sein de systèmes, comme par exemple des véhicules, éventuellement de type automobile.

Il existe de plus en plus de personnes qui possèdent une source audio et/ou vidéo externe (ou portable) comportant des fichiers (numériques) audio et/ou vidéo destinés à être lus. Ces sources sont généralement des baladeurs numériques de type MP3 ou multimédia dont les dimensions sont (très) réduites, et donc permettent de les transporter très facilement. Ces sources peuvent donc être utilisées en différents endroits, et notamment dans différents systèmes, comme par exemple des véhicules (éventuellement de type automobile) ou des bâtiments.

On comprendra que si ces systèmes sont équipés d'un dispositif de contrôle de sources audio et/ou vidéo, comme par exemple un autoradio, connecté à au moins un haut-parleur, ledit dispositif devient au moins partiellement redondant en présence de personnes équipées d'un baladeur numérique. Afin d'éviter une telle redondance, il a été proposé, notamment dans le document brevet EP 1946971, de supprimer l'autoradio d'un véhicule automobile et d'utiliser une planche de bord comportant un logement destiné à recevoir une source (audio et/ou vidéo) externe et muni de moyens de connexion pour raccorder cette source externe aux haut-parleurs ainsi qu'éventuellement à la batterie. L'inconvénient de cette solution réside dans le fait que lorsqu'un tel véhicule comprend des passagers qui ne sont pas équipés d'une source externe, ces derniers sont privés de musique ou d'informations.

L'invention a pour but de proposer une solution alternative qui limite la redondance de sources audio et/ou vidéo au sein d'un système lorsque ce dernier comprend au moins une personne équipée d'une source audio et/ou vidéo externe (ou portable), tout en permettant l'écoute de programmes radiophoniques lorsque aucune personne présente ne dispose d'une source audio et/ou vidéo externe (ou portable).

L'invention propose à cet effet un dispositif, dédié au contrôle de sources audio et/ou vidéo, propre à être implanté dans un volume standardisé au sein d'un système équipé d'au moins un haut-parleur, et comprenant :
- un module propre à être logé dans le volume standardisé, muni de composants électriques définissant un amplificateur audio, propre à être connecté audit haut-parleur, et une source audio radiophonique, et des organes de commande saillants et des moyens d'affichage montés sur une face avant et propres respectivement à sélectionner et commander chaque source et des paramètres de diffusion sonore et à afficher des informations relatives à la source sélectionnée,
- au moins un connecteur de liaison connecté au module et propre à coopérer avec un câble de liaison correspondant d'une source audio et/ou vidéo externe et à être logé dans le volume standardisé, et
- un masque propre à être monté devant la face avant du module de manière à masquer le volume standardisé, et comprenant des ouvertures, destinées à être placées respectivement au niveau des organes de commande saillants, des moyens d'affichage et de chaque connecteur de liaison, et un réceptacle ouvert propre à être logé dans le volume standardisé et à recevoir la source externe.

Le dispositif de contrôle selon l'invention peut comporter d'autres caractéristiques qui peuvent être prises séparément ou en combinaison, et notamment :
- il peut également comprendre un connecteur d'alimentation électrique propre à être logé dans le volume standardisé et à être connecté à des moyens d'alimentation du système et à un câble de liaison d'alimentation de la source externe. Dans ce cas, son masque peut comprendre une ouverture destinée à être placée au niveau de son connecteur d'alimentation électrique ;
   ➢ le connecteur d'alimentation électrique peut être propre à être logé dans le volume standardisé à une distance choisie du masque ;
- l'un au moins de ses connecteurs de liaison peut être propre à être logé dans le volume standardisé à une distance choisie du masque ;
- il peut comprendre au moins deux connecteurs de liaison de types différents destinés à être connectés à des sources externes de types différents ;
- chaque connecteur de liaison peut être choisi parmi (au moins) un connecteur de type USB et un connecteur de type Jack femelle ;
- son module peut être propre à être connecté à au moins un écran d'affichage implanté dans le système ;
- son module peut comprendre une carte à circuits imprimés ;
- la source externe peut être un baladeur numérique audio et/ou vidéo ;
- son masque peut comprendre un renfoncement comportant les ouvertures qui sont destinées à être placées au niveau du (des) connecteur(s) de liaison et/ou du connecteur d'alimentation électrique. Dans ce cas, il peut également comprendre un cache destiné à être placé au niveau d'une face avant du masque de manière à cacher le renfoncement et comportant au moins une ouverture destinée à permettre le passage d'au moins un câble de liaison de la source externe ;
- son masque peut être agencé de manière à obturer complètement un volume standardisé ayant une largeur sensiblement égale à 180 mm et une hauteur sensiblement égale à 60 mm.

L'invention propose également un système, comme par exemple un véhicule, éventuellement automobile, comprenant au moins un haut-parleur et un volume standardisé dans lequel est implanté un dispositif de contrôle du type de celui présenté ci-avant. Le volume standardisé peut par exemple être défini dans une planche de bord.

D'autres caractéristiques et avantages de l'invention apparaîtront à l'examen de la description détaillée ci-après, et des dessins annexés, sur lesquels :
- la figure 1 illustre schématiquement, dans une vue de face, un exemple de module d'un exemple de dispositif de contrôle selon l'invention,
- la figure 2 illustre schématiquement, dans une vue de face, un exemple de masque de dispositif de contrôle selon l'invention, destiné à coopérer avec le module de la figure 1,
- la figure 3 illustre schématiquement, dans une vue de face, le dispositif de contrôle selon l'invention constitué des module et masque des figures 1 et 2, et
- la figure 4 illustre schématiquement, dans une vue en coupe selon l'axe IV-IV de la figure 3, le dispositif de contrôle de la figure 3, avec un cache additionnel.

Les dessins annexés pourront non seulement servir à compléter l'invention, mais aussi contribuer à sa définition, le cas échéant.

L'invention a pour but de proposer un dispositif (D) de contrôle de sources audio et/ou vidéo destiné à être implanté dans un système équipé d'au moins un haut-parleur et disposant d'un volume standardisé (par exemple de type ISO).

Dans ce qui suit, on considère, à titre d'exemple non limitatif, que le système est un véhicule automobile, comme par exemple une voiture, un camping car ou un véhicule utilitaire. Mais, l'invention n'est pas limitée à ce type de système. Elle concerne en effet tout type de système comprenant au moins un haut-parleur et un volume standardisé. Par conséquent, il pourra également s'agir d'un bateau, d'un bâtiment, d'une caravane, d'un avion, d'un camion, d'un car (ou bus) ou d'une motocyclette, par exemple.

Par ailleurs, on considère dans ce qui suit, à titre d'exemple non limitatif, que le volume standardisé est défini dans une planche de bord du véhicule. Mais, le volume standardisé pourrait être défini en d'autres endroits du véhicule, et notamment dans une console (éventuellement centrale (par exemple entre des sièges)) ou sous le pavillon (par exemple au niveau d'un pare-soleil situé en face d'une place avant).

De plus, on considère dans ce qui suit, à titre d'exemple non limitatif, que le volume standardisé est un parallélépipède présentant une largeur (L) sensiblement égale à 180 mm et une hauteur (H) sensiblement égale à 60 mm. Mais, l'invention n'est pas limitée à cet exemple de volume standardisé.

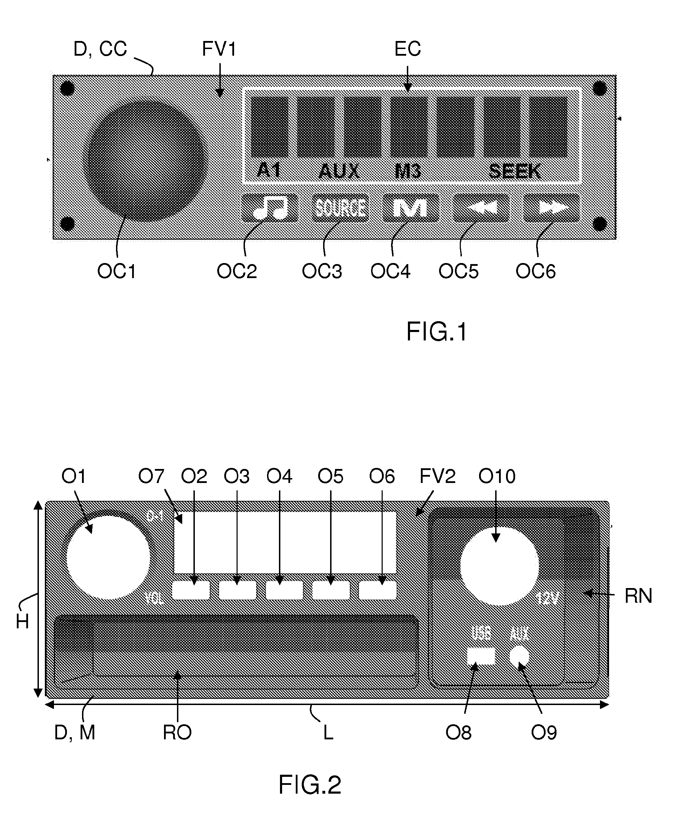

On a schématiquement représenté sur les figures 1 à 4 un exemple non limitatif de dispositif de contrôle D, selon l'invention.

Comme illustré, un tel dispositif (de contrôle) D comprend un module CC, au moins un connecteur de liaison CLj et un masque M, qui sont tous destinés à être logés à l'intérieur d'un volume standardisé de hauteur H et largeur L (et par exemple défini dans la planche de bord d'un véhicule automobile).

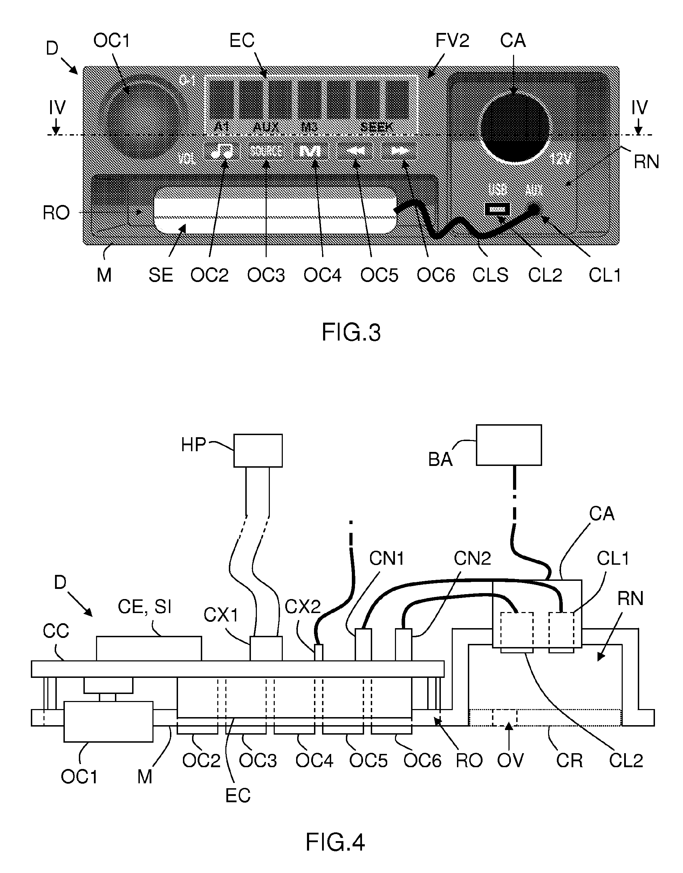

Comme illustré sur les figures 1 et 4, le module CC est muni de composants électriques (ou électroniques) CE, d'organes de commande saillants OCi et de moyens d'affichage EC, par exemple montés sur une carte à circuits imprimés (ou PCB (« Printed Circuit Board »). Cette carte à circuits imprimés est par exemple un élément modulaire de taille standardisée. Il présente par exemple une largeur (L) sensiblement égale à 120 mm et une hauteur (H) sensiblement égale à 35 mm.

Les composants électriques (ou électroniques) CE définissent un amplificateur audio, qui est propre à être connecté au(x) haut-parleur(s) HP du système (ici un véhicule) via un connecteur CX1, et une source audio radiophonique (ou tuner) SI qui est connectée à une antenne radio via un connecteur CX2.

On notera que le module CC peut éventuellement comporter un connecteur additionnel destiné à le connecter à au moins un écran d'affichage (ou moniteur) implanté dans le système (ici un véhicule), par exemple sur la face arrière d'un siège.

Les organes de commande saillants OCi sont montés sur la face avant FV1 de la carte à circuits imprimés et sont destinés à permettre à un usager de sélectionner et commander la source audio radiophonique (ou tuner) « interne » SI ou une source audio et/ou vidéo externe SE (sur laquelle on reviendra plus loin) et des paramètres de diffusion sonore, comme par exemple le volume (ou intensité) sonore et l'ambiance (niveau des basses et des aigus, balance et analogues). Dans l'exemple non limitatif illustré, le module CC comprend six organes de commande saillants OC1 à OC6 (i = 1 à 6). Mais, il pourrait en comporter moins de six, par exemple deux, trois, quatre ou cinq, ou bien plus de six, par exemple sept ou huit, voire même plus. Par exemple :
- le premier organe (de commande saillant) OC1 est un bouton rotatif destiné au réglage du volume sonore et au contrôle de la mise en fonctionnement et de l'arrêt du dispositif D (« On/Off »),
- le deuxième organe OC2 est une touche à incrément (éventuellement sensitive) destinée à sélectionner une ambiance sonore parmi plusieurs. Un appui long peut par exemple provoquer la sélection ou la désélection d'une ambiance,
- le troisième organe OC3 est une touche à incrément (éventuellement sensitive) destinée à sélectionner la source interne (tuner) SI ou externe SE. Un appui long peut par exemple provoquer l'utilisation ou la non utilisation des haut-parleurs,
- le quatrième organe OC4 est une touche à incrément (éventuellement sensitive) destinée à mémoriser une station radiophonique sélectionnée de la source interne SI. Un appui long peut par exemple provoquer la mémorisation d'une station,
- les cinquième OC5 et sixième OC6 organes sont des touches à incrément (éventuellement sensitives) destinées à sélectionner les stations radiophoniques de la source interne SI ou bien un fichier stocké dans la mémoire d'une source externe SE. Un appui long peut par exemple provoquer la recherche automatique jusqu'à la station suivante ou le placement au début de la liste des fichiers stockés.

Les moyens d'affichage EC sont également montés sur la face avant FV1 de la carte à circuits imprimés et sont destinés à afficher des informations relatives à la source interne SI ou externe SE qui a été sélectionnée. L'affichage est de type contextuel. Ces moyens d'affichage EC peuvent par exemple se présenter sous la forme d'un écran à cristaux liquides (LCD) ou d'une matrice de points lumineux. On notera qu'ils peuvent éventuellement servir à afficher l'heure courante.

Comme indiqué ci-avant, et comme illustré sur les figures 3 et 4, le dispositif D comprend au moins un connecteur de liaison CLj connecté à son module CC via un connecteur CNj, et installé dans le volume standardisé à côté dudit module CC. Dans l'exemple non limitatif illustré, le dispositif D comprend deux connecteurs de liaison CL1 et CL2 (j = 1 ou 2), ici respectivement de type Jack femelle et USB. Mais, le dispositif D pourrait ne comporter qu'un seul connecteur de liaison CLj ou bien plus de deux. Par ailleurs, d'autres types de connecteurs de liaison peuvent être envisagés, notamment HDMI.

Chaque connecteur de liaison CLj est agencé de manière à coopérer avec un câble de liaison CLS correspondant (c'est-à-dire comportant au moins un connecteur de type correspondant (ici Jack mâle ou USB)) d'une source (audio et/ou vidéo) externe SE.

On entend ici par « source externe SE » un équipement portable (ou mobile ou encore nomade) comportant des fichiers (numériques) audio et/ou vidéo qu'il peut lire. Il s'agit par exemple d'un baladeur numérique de type MP3 ou multimédia dont les dimensions sont (très) réduites.

Selon le type de la source externe SE, le module CC peut ou ne peut pas prendre son contrôle. Si ce n'est pas possible, alors c'est essentiellement la fonction d'amplification du module CC et la connexion aux haut-parleurs HP qui sont utilisées. En revanche, si c'est possible, l'usager peut contrôler la source externe SE, qui est connectée au module CC via un câble de liaison CLS, un connecteur de liaison CLj et un connecteur CNj, au moyen de l'un au moins des organes de commande saillants OCi. Les informations relatives à la source externe SE sont alors affichées sur les moyens d'affichage EC.

On notera, comme illustré sur les figures 2 à 4, que le dispositif D peut éventuellement comprendre en complément un connecteur d'alimentation électrique CA destiné à être logé dans le volume standardisé et à être connecté, d'une part, à des moyens d'alimentation du système, comme par exemple une batterie BA, et d'autre part, à un câble de liaison d'alimentation de la source externe SE. Cela permet de recharger la batterie de la source externe SE et/ou d'utiliser cette dernière (SE) sans consommer l'énergie de sa batterie. Ce connecteur d'alimentation électrique CA est par exemple de type 12 Volts.

Comme indiqué ci-avant, et comme illustré sur les figures 2 à 4, le dispositif D comprend un masque M monté devant la face avant FV1 de son module CC de manière à masquer l'intégralité du volume standardisé. On notera, comme illustré sur les figures 3 et 4, que le module CC et/ou le(s) connecteur(s) de liaison CLj et l'éventuel connecteur d'alimentation électrique CA peuvent être solidarisés au masque M directement ou indirectement (par exemple au moyen de clips ou de vis).

Ce masque M comprend des ouvertures Ok qui sont destinées à être placées respectivement au niveau des organes de commande saillants OCi, des moyens d'affichage EC et de chaque connecteur de liaison CLj. Chaque ouverture constituant ainsi une fenêtre permettant soit de visualiser les moyens d'affichage EC, soit de laisser passer un organe (de commande saillant) OCi ou une partie terminale d'un connecteur de liaison CLj ou de l'éventuel connecteur d'alimentation électrique CA. Dans l'exemple non limitatif illustré, le dispositif D comprend dix ouvertures 01 à 010 (k = 1 à 10), dont les formes varient en fonction des formes des éléments qu'elles encadrent ou qui les traversent respectivement. Les ouvertures 01 à 06 sont destinées à laisser passer respectivement les premier OC1, deuxième OC2, troisième OC3, quatrième OC4, cinquième OC5 et sixième OC6 organes, l'ouverture 07 est destinée à permettre la visualisation des informations affichées sur les moyens d'affichage EC, et les ouvertures 08 à 010 sont destinées à laisser passer respectivement les parties terminales des deux connecteurs de liaison CL1 et CL2 et du connecteur d'alimentation électrique CA.

Le masque M comprend également un réceptacle ouvert RO propre à être logé dans le volume standardisé et à recevoir une partie au moins de la source externe SE.

On notera, comme illustré sur les figures 2 à 4, que le masque M peut éventuellement comprendre en complément au moins un renfoncement RN au fond duquel sont définis les ouvertures 08 à 010 qui sont ici destinées à être placées au niveau des connecteurs de liaison CL1 et CL2 et du connecteur d'alimentation électrique CA.

Un tel renfoncement RN est destiné à écarter d'une distance choisie de la face avant FV2 du masque M (où font saillie les organes OCi) chaque connecteur de liaison CLj et l'éventuel connecteur d'alimentation électrique CA de manière à permettre le logement d'une partie au moins d'au moins un câble de liaison de la source externe SE.

Ce renfoncement RN peut être éventuellement masqué (ou caché) par un cache amovible CR que l'on vient placer sensiblement au niveau de la face avant FV2 du masque M. Comme illustré, ce cache CR peut comporter au moins une ouverture OV destinée à permettre le passage d'au moins un câble de liaison de la source externe SE de manière à la connecter au dispositif D ainsi qu'éventuellement à la batterie BA.

Le cache CR peut par exemple être clippé sur le masque afin d'être facilement retiré par un usager.

Le masque M peut par exemple être vissé par l'arrière dans le volume standardisé de manière à ne pas être trop facilement désolidarisé de la planche de bord par une personne mal intentionnée.

Le masque M et son éventuel cache CR peuvent par exemple être réalisés par moulage dans un matériau synthétique, comme par exemple un plastique ou du carbone, ou bien par emboutissage d'un métal, comme par exemple de l'aluminium.

L'invention ne se limite pas aux modes de réalisation de dispositif de contrôle et de système décrits ci-avant, seulement à titre d'exemple, mais elle englobe toutes les variantes que pourra envisager l'homme de l'art dans le cadre des revendications ci-après.

## Revendications

1. Dispositif (D) de contrôle de sources audio et/ou vidéo (SI, SE), propre à être implanté dans un volume standardisé au sein d'un système équipé d'au moins un haut-parleur, **caractérisé en ce qu'**il comprend i) un module (CC) propre à être logé dans ledit volume standardisé, muni de composants électriques définissant un amplificateur audio, propre à être connecté audit haut-parleur, et une source audio radiophonique (SI), et des organes de commande saillants (OCi) et des moyens d'affichage (EC) montés sur une face avant (FV1) et propres respectivement à sélectionner et commander chaque source (SI, SE) et des paramètres de diffusion sonore et à afficher des informations relatives à la source (SI, SE) sélectionnée, ii) au moins un connecteur de liaison (CLj) connecté audit module (CC) et propre à coopérer avec un câble de liaison (CLS) correspondant d'une source audio et/ou vidéo externe (SE) et à être logé dans ledit volume standardisé, et iii) un masque (M) propre à être monté devant ladite face avant (FV1) du module (CC) de manière à masquer ledit volume standardisé, et comprenant des ouvertures (Ok) destinées à être placées respectivement au niveau des organes de commande saillants (OCi), des moyens d'affichage (EC) et de chaque connecteur de liaison (CLj), et un réceptacle ouvert (RO) propre à être logé dans ledit volume standardisé et à recevoir ladite source externe (SE).

2. Dispositif selon la revendication 1, **caractérisé en ce qu'**il comprend en outre un connecteur d'alimentation électrique (CA) propre à être logé dans ledit volume standardisé et à être connecté à des moyens d'alimentation dudit système et à un câble de liaison d'alimentation de ladite source externe (SE), et **en ce que** ledit masque (M) comprend une ouverture (Ok) destinée à être placée au niveau dudit connecteur d'alimentation électrique (CA).

3. Dispositif selon la revendication 2, **caractérisé en ce que** ledit connecteur d'alimentation électrique (CA) est propre à être logé dans ledit volume standardisé à une distance choisie dudit masque (M).

4. Dispositif selon l'une des revendications 1 à 3, **caractérisé en ce que** l'un desdits connecteurs de liaison (CLj) est propre à être logé dans ledit volume standardisé à une distance choisie dudit masque (M).

5. Dispositif selon l'une des revendications 1 à 4, **caractérisé en ce qu'**il comprend au moins deux connecteurs de liaison (CLj) de types différents destinés à être connectés à des sources externes (SE) de types différents.

6. Dispositif selon l'une des revendications 1 à 5, **caractérisé en ce que** chaque connecteur de liaison (CLj) est choisi dans un groupe comprenant au moins un connecteur de type USB et un connecteur de type Jack femelle.

7. Dispositif selon l'une des revendications 1 à 6, **caractérisé en ce que** ledit module (CC) est propre à être connecté à au moins un écran d'affichage implanté dans ledit système.

8. Dispositif selon l'une des revendications 1 à 7, **caractérisé en ce que** ledit module (CC) comprend une carte à circuits imprimés.

9. Dispositif selon l'une des revendications 1 à 8, **caractérisé en ce que** ladite source externe (SE) est un baladeur numérique audio et/ou vidéo.

10. Dispositif selon l'une des revendications 3 à 9, **caractérisé en ce que** ledit masque (M) comprend un renfoncement (RN) comportant les ouvertures (Ok) destinées à être placées au niveau desdits connecteur(s) de liaison (CLj) et/ou dudit connecteur d'alimentation électrique (CA), et **en ce qu'**il comprend un cache (CR) destiné à être placé au niveau d'une face avant (FV2) dudit masque (M) de manière à cacher ledit renfoncement (RN) et comportant au moins une ouverture (OV) destinée à permettre le passage d'au moins un câble de liaison de ladite source externe (SE).

11. Dispositif selon l'une des revendications 1 à 10, **caractérisé en ce que** ledit masque (M) est agencé de manière à obturer complètement un volume standardisé ayant une largeur (L) sensiblement égale à 180 mm et une hauteur (H) sensiblement égale à 60 mm.

12. Système comprenant au moins un haut-parleur et un volume standardisé, **caractérisé en ce qu'**il comprend un dispositif de contrôle (D) selon l'une des revendications précédentes.

13. Système selon la revendication 12, **caractérisé en ce qu'**il constitue un véhicule.

14. Système selon la revendication 13, **caractérisé en ce qu'**il comprend une planche de bord dans laquelle est défini ledit volume standardisé.
